(19)

Europäisches
Patentamt

European
Patent Office

Office européen
des brevets

(11)   **EP 4 430 139 B1**

(12)                           **EUROPEAN PATENT SPECIFICATION**

(45) Date of publication and mention
of the grant of the patent:
**04.02.2026   Bulletin 2026/06**

(51) International Patent Classification (IPC):
**C09K 8/74** *(2006.01)*        **C09K 8/82** *(2006.01)*

(21) Application number: **22829975.6**

(52) Cooperative Patent Classification (CPC):
**C09K 8/74; C09K 8/82**

(22) Date of filing: **08.11.2022**

(86) International application number:
**PCT/US2022/049186**

(87) International publication number:
**WO 2023/086307 (19.05.2023 Gazette 2023/20)**

(54) **INJECTION FLUIDS COMPRISING PROPOXYLATED ALCOHOLS AND THE USE OF SUCH FLUIDS FOR ACID STIMULATION DURING OIL RECOVERY PROCESSES**

INJEKTIONSFLÜSSIGKEITEN MIT PROPOXYLIERTEN ALKOHOLEN UND VERWENDUNG SOLCHER FLÜSSIGKEITEN ZUR SÄURESTIMULATION WÄHREND ÖLGEWINNUNGSVERFAHREN

FLUIDES D'INJECTION COMPRENANT DES ALCOOLS PROPOXYLÉS ET UTILISATION DE TELS FLUIDES POUR LA STIMULATION ACIDE PENDANT DES PROCÉDÉS DE RÉCUPÉRATION DE PÉTROLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.11.2021   US 202163277714 P**

(43) Date of publication of application:
**18.09.2024   Bulletin 2024/38**

(73) Proprietor: **Sasol Chemie GmbH & Co. KG**
**20537 Hamburg (DE)**

(72) Inventors:
• **STANCIU, Cornell**
**Lake Charles, LA 70605 (US)**
• **JONES, Christian, Wayne**
**Moss Bluff, LA 70611 (US)**
• **NGUYEN, Thu**
**Lake Charles, LA 70605 (US)**
• **FERNANDEZ, Jorge**
**Katy, TX 77494 (US)**
• **SOKHANVARIAN, Khatere**
**Houston, TX 77007 (US)**
• **NAPIERALA, Heinz**
**45699 Herten (DE)**
• **ENNEKING, Meinolf**
**44627 Herne (DE)**

(74) Representative: **Müller Schupfner & Partner Patent- und Rechtsanwaltspartnerschaft mbB (Hamburg)**
**Schellerdamm 19**
**21079 Hamburg (DE)**

(56) References cited:
GB-A- 2 141 731          US-A1- 2011 303 414
US-A1- 2014 073 540          US-A1- 2017 051 195

**Description**

FIELD OF THE INVENTION

The present invention relates to water-in-oil emulsifiers that are able to create stable acid-in-oil emulsions. More specifically, the invention is directed at injection fluids to enhance oil and gas well acid stimulation techniques through the use of linear and/or branched alkoxylated alcohol surfactants or mixtures thereof. The primary focus is to create stable acid-in-oil emulsions for acid fracturing during oil recovery from subterranean reservoirs, at elevated temperatures and over extended time periods.

BACKGROUND OF THE INVENTION AND DISCUSSION OF THE PRIOR ART

The production of hydrocarbons from subterranean formations can be enhanced by acid treatment, whereby the injected acid dissolves the minerals in the formations thus 'fracturing' the formation through the creation of enhanced flow paths. Acid stimulation is nothing new in the oil and gas industry and dates back to the late 1800's. Various acids can be used, however hydrochloric (HCl) acid was identified to be an excellent choice for carbonate wells. HCl is able to interact with limestone to form carbon dioxide ($CO_2$) and calcium chloride ($CaCl_2$) that can be easily flushed away with a desired solvent, according to the following equation:

$$CaCO_3 + 2HCl \rightarrow CaCl_2 + H_2O + CO_2$$

Hydrofluoric (HF) acid is used to stimulate sandstone / silicate formations. These formations contain quartz and aluminosilicate particles that ultimately plug producing pores and thus decrease production. HF acid can adequately dissolve these particles, restoring and enhancing productions rates. An example is illustrated below by the reaction of kaolinite (an aluminosilicate) with hydrofluoric acid:

$$Al_4Si_4O_{10}(OH)_8 + 36\ HF \rightarrow 4\ AlF_3 + 4\ H_2SiF_6 + 18\ H_2O$$

It has previously been shown that surfactants displaying the desirable property of lowering surface and interfacial tensions can significantly lower the capillary forces that restrict fluid flow in subterranean surfaces, and aid in the more complete recovery of oil. Previous acid fracturing developments include treatment fluids such as viscoelastic surfactant formulations described in US 7,299,870. These systems could include cationic surfactants having the structure $R_1N^+(R_2)(R_3)(R_4)X^-$, zwitterionic surfactants and amphoteric surfactants. In addition, anionic surfactants such as carboxylic acids having the generic structure $R-C(O)O^-$, and ethoxylated anionic surfactants such as alkoxylated alcohols and alkoxy sulfates may be applied. It was speculated that branched or linear alkyl chain lengths of $C_{10} - C_{22}$, and alkoxy groups of one to seven preferably ethoxy (EO), but possibly also propoxy (PO) or PO/EO mixtures might be used. The surfactant concentrate is intended to be used as diversion fluid and no mention is made about the creation of stable emulsions under high temperature well conditions over extended time periods.

WO2017035040 describes the use of branched alcohol ethoxylated non-ionic surfactants, specifically $C_6 - C_{36}$ Guerbet alcohol derived ethoxylates (EO = 1 - 16 units) for acid fracturing techniques. The purpose of the invention was however to demonstrate that this family of non-ionic surfactants does not result in stable emulsions at elevated temperatures in an acidic environment. In addition, US20140073540 describes the addition of dispersion agents such as surfactants to the emulsifying agent (typically polymeric alkanolamides). These dispersion agents can be $C_2 - C_{30}$ ethoxylated fatty alcohols, with 1 to 30 EO units. Stable emulsions were demonstrated for time periods up to 2.5 hours at elevated temperatures. US2016/0068742 describes non-ionic surfactants such as alkyl phenols or alkoxylated alcohols to be used together with organic acids in high salinity environments to assist with hardness tolerance and providing ultra-low interfacial tensions, to assist with treating fossil fluid-bearing subterranean formations. No organic solvents are used and no emulsions are formed.

Despite the technical advantages of using HCl and HF for acid treatments to stimulate oil production from subterranean wells, corrosion of the field equipment, formation damage and personnel safety are still issues of concern. Aqueous acid solutions are often spent close to the injection hole, and deep penetration becomes problematic. The development of alternative acid systems, together with new delivery methods to alleviate the problems observed, is therefore a much needed focus and research area. In particular, there is a need to identify enhanced, stable systems that are effective at elevated well temperatures over extended time periods.

OBJECT OF THE PRESENT INVENTION

It is the object of this invention to deliver enhanced surfactant systems to be applied in acid fracturing and stimulation processes during the treatment of subterranean formations, for effective oil recovery.

It is another object of this invention to provide stable emulsifier systems comprising linear and/or branched alkoxylated alcohols with a high degree of alkoxylation, in order to maximise acid delivery into the subterranean formation at high temperatures over extended time periods and to optimise oil recovery.

SUMMARY OF THE INVENTION

In the following, a water-in-oil emulsifier injection fluid, to be utilized for acid stimulation in subterranean formations to optimise oil recovery, is described. These fluids have been found to provide stable emulsions at elevated temperatures, as well as over extended time periods.

The injection fluid comprises at least one alkoxylated alcohol or a mixture of alkoxylated alcohols having the structure shown in formula (I):

$$R\text{-}O\text{-}(C_3H_6O)_m\text{-}(C_2H_4O)_n\text{-}H \qquad (I)$$

wherein

R is a linear or a branched alkyl group having from 12 to 36, preferably 16 to 36 carbon atoms; and

$$m \geq 10,$$

$$n \geq 1,$$

Preferably, both m and n are $\geq$ than 10, and most preferably m is $\geq$ 20.

Another preferred embodiment is wherein m/n $\geq$ 1.0.

The alkoxylated alcohol or mixture of alkoxylated alcohols typically have been alkoxylated to have a hydrophilic lipophilic balance (HLB) value of 3.0 to 7.5, more preferably 4.0 to 7.0, most preferably 5.9 to 6.5. In a preferred embodiment of the invention, the alkoxylated alcohol or mixture of alkoxylated alcohols is added to the injection fluid in an amount of 0.1 to 5.0 volume%, more preferably 0.3 to 4.0 volume%, most preferably 1.0 to 3.0 volume%, of the injection fluid.

The alkoxylated alcohols or mixture of alkoxylated alcohols described above can be produced using a number of different catalytic processes which can include alkaline catalysts such as sodium hydroxide or potassium hydroxide. The use of transition metal catalysts such as double metal cyanide (DMC) catalysts has also successfully been demonstrated.

In a preferred embodiment, the injection fluid comprises one or more alkoxylated alcohols wherein R is a branched alkyl group, specifically branched at carbon number 2 of the alkyl group.

In an alternative embodiment, R is a linear alkyl group.

Additionally, the injection fluid also comprises an inorganic acid or acids and/or an organic acid or acids, or mixtures thereof, as well as at least one hydrocarbon solvent.

The injection fluid comprises one or more inorganic acids, comprising hydrochloric acid (HCl) and/or hydrofluoric acid (HF) diluted in water to a strength of 0.1 to 28 wt%, preferably 3 to 20 wt%. When organic acids are utilised, the acid or acids comprise formic acid, acetic acid, malonic acid, oxalic acid, glycolic acid or citric acid. The acid or mixture of acids are added to the injection fluid in an amount of 50 to 80 volume%, preferably 60 to 75 volume%, most preferably 65 to 70 volume%. In a preferred embodiment, the inorganic acid or acids are selected from the group consisting of hydrochloric acid (HCl), hydrofluoric acid (HF), and mixtures thereof diluted in water to a strength of 0.1 to 28 wt%, preferably 3 to 20 wt%. In instances when an organic acid or acids are utilised, preferably the organic acid or acids are selected from the group consisting of formic acid, acetic acid, malonic acid, oxalic acid, glycolic acid and citric acid.

Hydrocarbon solvents for the injection fluid can typically be diesel, or hydrocarbon compounds / mixtures such as aliphatic and/or aromatic compounds, including blends of olefins, paraffins, aromatics, naphthenics and/or oxygenates, that are liquid at suitable application temperature ranges. Specific examples would include compounds exemplified by trade names such as HF-1000 and LPA, or xylene, crude oil and similar compounds. These solvents are added to the injection fluid in an amount of 20 to 50 volume%, preferably 25 to 40 volume%, most preferably 30 to 35 volume%.

Various co-solvents can also be added to the alkoxylated alcohol or mixture of alkoxylated alcohols, in order to assist with the flowability / pumpability of the injection fluid at room temperature and lower temperatures, ranging from compounds or mixtures of compounds such as glycols, ethers, and alcohols. In an embodiment, the co-solvent or mixture of co-solvents comprise alcohols, alkoxylated alcohols, alcohol ethers, polyalkylene alcohol ethers, polyalkylenenglycols, poly(oxyalkylene) glycols or poly(oxyalkylene) glycol ethers. In a preferred embodiment, the co-solvent or mixture of co-solvents are selected from the group consisting of alcohols, alkoxylated alcohols, alcohol ethers, polyalkylene alcohol ethers, polyalkylenenglycols, poly(oxyalkylene) glycols and poly(oxyalkylene) glycol ethers.

The co-solvent is added to the alkoxylated alcohol or mixture of alkoxylated alcohols in an amount of 5 to 50 wt%, preferably from 15 to 40 wt%, most preferably from 20 to 25 wt%.

Another embodiment of the current invention, is a method for acid stimulation of a subterranean formation, the method comprising

i) injecting an injection fluid as described above into the subterranean formation;
ii) allowing sufficient time for the injection fluid to react with the minerals in a subterranean formation; and
iii) providing improved flow paths in the subterranean formation for production of hydrocarbons.

The said method for providing an injection fluid for acid stimulation of a subterranean formation would include all embodiments and preferred embodiments of the inventive injection fluids described above.

Also claimed is the use of alkoxylated alcohols having the following structure:

$$R\text{-}O\text{-}(C_3H_6O)_m\text{-}(C_2H_4O)_n\text{-}H \qquad (I)$$

wherein

R is a linear or a branched alkyl group having from 12 to 36 carbon atoms;

$$m \geq 10;$$

and

$$n \geq 1.$$

Preferably, both m and n are $\geq$ than 10, and most preferably m is $\geq$ 20.

In a further preferred embodiment, m/n $\geq$ 1.

The alkoxylated alcohol or mixture of alkoxylated alcohols have a hydrophilic lipophilic balance (HLB) value of 3.0 to 7.5, more preferably 4.0 to 7.0, most preferably 5.9 to 6.5, in a water-in-oil emulsifier injection fluid. The injection fluid further comprises a hydrocarbon solvent and an organic or inorganic acid or mixtures of acids, and is utilized for acid stimulation in subterranean formations. In a preferred embodiment, the water-in-oil emulsifier injection fluid comprised alkoxylated alcohols together with crude oils as hydrocarbon solvent, and acid stimulation is carried out in a subterranean formation, specifically a well.

The use of the inventive injection fluids for acid stimulation in subterranean formations or wells would include all embodiments and preferred embodiments of the said injection fluids described above.

Unlike the prior art, the inventive injection fluids are simple formulations that are stable at elevated temperatures over extended time periods. Stable water-in-oil emulsions are provided that can be designed to have low viscosities over an extended temperature range. It was specifically demonstrated that the stability of the emulsions that formed upon addition of the alkoxylated alcohols to the injection fluid, was higher when compared to the stability of emulsions formed without the addition of the alkoxylated alcohols.

These and further features and advantages of the present invention will become apparent from the following detailed description.

## DETAILED DESCRIPTION

The injection fluids of the current invention are effective emulsifiers resulting in stable water-in-oil emulsions, to be used to enhance oil and gas well acid stimulation techniques. The performance of the formulations can optimally be designed by tailoring the hydrophobe structures of the surfactant compounds, the alkyl chain being branched or linear, the carbon chain length ranging between C12 to C36, together with the number of propylene oxide (PO) and ethylene oxide (EO) units.

## EXPERIMENTAL SECTION

Materials

A number of non-ionic surfactants, specifically alkoxylated alcohols, were synthesized according to standard procedures (see preparation method described below) and their properties characterized. The materials used in various tests to determine the efficiency of the compounds as emulsion-stabilisers for acidizing agents are shown in Table 1:

**Table 1:** Non-ionic surfactants (alkoxylated alcohols) used to evaluate emulsifying properties

| Number | Derived from Alcohol (Trade Name) | Alcohol carbon-chain length | Alcohol structure | Propylene oxide (PO) units | Ethylene oxide (EO) units | HLB* Value |
|---|---|---|---|---|---|---|
| 1** | ALFOL 20 | C20 | Linear | 35 | 10 | 3.1 |
| 2** | ALFOL 20 | C20 | Linear | 35 | 20 | 5.4 |
| 3** | ALFOL 20+ | C20+ | Linear | 20 | 15 | 6.2 |
| 4** | NAFOL 1618 (A) | C16 - 18 | Linear | 25 | 14 | 5.3 |
| 5** | NAFOL 1618 (B) | C16 - 18 | Linear | 25 | 20 | 6.8 |
| 6** | Mixture (vol%) of NAFOL 1618(A)/NAFOL1618(B): 1:3<br>NAFOL 1618(A)<br>NAFOL 1618 (B) | C16 - 18 | Linear | <br><br>25<br>25 | <br><br>**14**<br>20 | <br><br>5.3<br>6.8 |
| 7** | NAFOL 1618 | C16 - 18 | Linear | 35 | 20 | 5.6 |
| 8** | NAFOL 20 | C20 | Linear | 35 | 10 | 3.2 |
| 9** | NAFOL 20 | C20 | Linear | 35 | 20 | 5.5 |
| 10** | NAFOL 20+ | C20+ | Linear | 35 | 20 | 5.4 |
| 11** | NACOL 22 | C22 | Linear | 25 | 20 | 6.6 |
| 12** | ISOFOL 24 | C24 | 100% 2-alkyl branched (1.0 branch / molecule) | 35 | 20 | 5.4 |
| 13** | ISOFOL 24 | C24 | 100% 2-alkyl branched (1.0 branch / molecule) | 35 | 10 | 3.1 |
| 14** | ISOFOL 28 | C28 | 100% 2-alkyl branched (1.0 branch / molecule) | 35 | 20 | 5.3 |
| 15** | ISOFOL 28 | C28 | 100% 2-alkyl branched (1.0 branch / molecule) | 35 | 10 | 3.1 |
| 16** | ISOFOL 28 | C28 | 100% 2-alkyl branched (1.0 branch / molecule) | 20 | 20 | 7.2 |
| 17** | ISOFOL 28 | C28 | 100% 2-alkyl branched (1.0 branch / molecule) | 20 | 13 | 5.3 |
| 18** | ISOFOL 28 | C28 | 100% 2-alkyl branched (1.0 branch / molecule) | 10 | 20 | 9.4 |
| 19** | ISOFOL 28 | C28 | 100% 2-alkyl branched (1.0 branch / molecule) | 10 | 8 | 5.2 |

(continued)

| Number | Derived from Alcohol (Trade Name) | Alcohol carbon-chain length | Alcohol structure | Propylene oxide (PO) units | Ethylene oxide (EO) units | HLB* Value |
|---|---|---|---|---|---|---|
| 20*** | ISOFOL 28 | C28 | 100% 2-alkyl branched (1.0 branch / molecule) | 0 | 3.5 | 5.5 |
| 21 *** | ALFOL 6 | C6 | Linear | 35 | 20 | 5.8 |
| 22*** | SAFOL 23 | C1213? | 50% linear/50% branched | 8 | 4 | 4.2 |
| 23*** | ISOFOL 12 | C12 | 100% 2-alkyl branched (1.0 branch / molecule) | - | 9 | 13.6 |
| 24*** | ISOFOL 28 | C28 | 100% 2-alkyl branched (1.0 branch / molecule) | - | 3.5 | 5.5 |
| 25*** | ISOFOL 28 | C28 | 100% 2-alkyl branched (1.0 branch / molecule) | - | 8 | 9.2 |
| 26*** | ALFOL 18 | C18 | Linear | - | 3 | 6.6 |

*HLB refers to the Hydrophile-Lipophile Balance, The values were calculated according to the method described in Griffin
*W C.* Calculation of HLB values of non-ionic surfactants, J. Soc. Cosmet. Chem. 1954; 5: 249-256.
** Surfactants used to exemplify the invention.
*** Surfactants used for comparative examples

Hydrocarbon solvents used for the experiments, are shown in Table 2.

**Table 2:** Hydrocarbon solvents used together with the non-ionic surfactants

| NAME / TRADENAME | Carbon Range | Description |
|---|---|---|
| Diesel | C9-C23 | Paraffinic / Naphthenic / Aromatic hydrocarbon mixtures |
| HF-1000 | C10 - C24 | Paraffin / Olefin / Oxygenate solvent mixture |
| LPA | C10 C16 | Paraffinic / Naphthenic solvent mixture |
| Xylene | C8 | $C_8H_{10}$: Aromatic hydrocarbon |

Co-solvents evaluated are shown in Table 3.

**Table 3:** Co-solvents used together with non-ionic surfactants

| NAME / TRADENAME | Chemical Formula | Symbol |
|---|---|---|
| NACOL Ether 6 (Dihexylether) | $CH_3(CH_2)_5O(CH_2)_5CH_3$ | - |
| MARLOPHEN P1 (Phenoxy-ethanol) (40%) + Butyl glycol (2-butoxy-ethanol) (40%) + $H_2O$ (20%) | $C_6H_5OC_2H_4OH + C_4H_9OCH_2CH_2OH$ | L1 |
| Butyl glycol (2-butoxy-ethanol) (60%)+ $H_2O$ (40%) | $C_4H_9OCH_2CH_2OH$ | L2 |

The acids and acid strengths evaluated, are summarised in Table 4.

**Table 4:** Acids evaluated

| ACID | Strength (wt%) |
|------|----------------|
| HCl | 15 |
| HCl | 20 |
| HCl | 28 |
| HF | 5 |
| HCl / HF mixture | 10%HCl / 3% HF (1:1) |

## General Synthesis Procedure of the Alkoxylated Alcohols

The general procedure for alkoxylation of alcohols is well known to those skilled in the art. Alkoxylation catalysts include Sasol's proprietary NOVEL catalyst, and typical base-catalysed alkoxylation catalysts such as NaOH and KOH. In other embodiments, double metal cyanide (DMC) catalysts may be employed. Reaction conditions are chosen to result in specific molecular weight distributions of the alkoxylates, and are likewise known to the person skilled in the art.

## GENERAL EXPERIMENTAL PROCEDURE:

The following general method was used to test for emulsion stability:

1) Place 27 - 30 volume% of hydrocarbon solvent into vessel.
2) Add 1 - 3 volume% (based on total mixture) of non-ionic surfactant emulsifier to the vessel. In cases where a co-solvent is employed, it would be added at this stage to the non-ionic surfactant emulsifier as 25 wt% based on the non-ionic surfactant.
3) Mix the solvent and emulsifier for approx. 5 minutes under shear, until surfactant emulsifier is dispersed in the solvent.
4) While the mixer is on at high (1000 - 2000) RPM, slowly add in the remaining 67 - 70 volume % of acid solution dropwise into the mixture (over a period of 10 - 12 min).
5) Mixing depends on amount of shear that is being introduced into the solution. The typical amount of time needed to create a w/o emulsion is 4-6 minutes. Stable emulsions are created with longer time, however too much time under shear will destabilize the emulsion, creating an undesirable oil-in-water (o/w) emulsion or completely breaking the system.
6) Use a conductivity meter to evaluate type of emulsion formed. If a water-in-oil emulsion (w/o) is formed, low to zero $\mu$s/cm conductivity will be measured; however if an oil-in-water emulsion (o/w) is formed, the conductivity meter will give a high reading.

Once the emulsion was formed, the sample was placed in a pre-heated water or oil bath (using Ace glass pressure tubes). The thermal stability of the emulsified acid was monitored at a specific temperature as a function of time. An emulsion was labelled "stable" at a specific temperature when no phase separation was observed within a specified time, whereas an "unstable" emulsion displayed clear phase separation within the specified time.

Any viscosity data presented were determined with a Rheometer Anton Parr MCR 30X, sensor CC27-SN 30308 at 25°C.

Results for the specific experiments conducted, are shown below.

TABLE 5: Various water-in-oil emulsifier injection fluids tested for stability

| SUR-FAC-TANT | Surf Vol % | HLB | EMUL-SION | SOLVENT | HCl (wt %) | HF (wt %) | HF/HCl 1:1 (wt %) | Emulsion Stability @ 25°C, 4 hrs | Emulsion Stability @ 25°C, 12 hrs | Emulsion Stability @ 90°C, 4 hrs | Emulsion Stability @ 80°C, 4 hrs | Emulsion Stability @ 148°C, 4 hrs | Emulsion Stability @ 150°C, 5 hrs |
|---|---|---|---|---|---|---|---|---|---|---|---|---|---|
| ISOFOL 28-35PO-20EO | 3 | 5.3 | W/O | Diesel | 15 | - | - | - | - | - | Stable | Stable | - |
| ISOFOL 28-35PO-20EO | 3 | 5.3 | W/O | Diesel | 28 | - | - | - | - | - | Stable | Stable | - |
| ISOFOL 28-35PO-20EO | 3 | 5.3 | W/O | Xylene | 15 | - | - | - | - | - | Stable | Stable | - |
| ISOFOL 28-35PO-20EO | 3 | 5.3 | W/O | HF-1000 | 15 | - | - | - | - | - | Stable | Stable | - |
| ISOFOL 28-35PO-20EO | 3 | 5.3 | W/O | NACOL Ether 6 | 15 | - | - | - | - | - | Stable | Stable | - |
| ISOFOL 28-35PO-20EO | 3 | 5.3 | W/O | Diesel | - | 5 | - | - | Stable | - | - | - | - |
| ISOFOL 28-35PO-20EO | 3 | 5.3 | W/O | Diesel | - | - | 5/15 | - | - | - | - | - | Stable |
| ISOFOL 28-35PO-20EO | 3 | 5.3 | W/O | Diesel | 20 | - | - | Stable | Stable | Stable | - | - | - |
| ISOFOL 28-20PO-20EO | 3 | 7.2 | W/O | Diesel | 15 | - | - | Stable | - | Stable | - | - | - |
| ISOFOL 24-35PO-10EO | 3 | 3.1 | W/O | Diesel | 20 | - | - | Stable | - | - | Stable | - | - |
| ISOFOL 24 35PO-20EO | 3 | 5.4 | W/O | Diesel | 20 | - | - | Stable | - | - | Stable | - | - |
| NAFOL 20-35PO-20EO | 3 | 5.5 | W/O | Diesel | 20 | - | - | Stable | Stable | - | Stable | - | - |
| NACOL 22-25PO-20EO | 3 | 6.6 | W/O | Diesel | 15 | - | - | - | - | - | Stable | - | - |

(continued)

| SUR-FAC-TANT | Surf Vol % | HLB | EMUL-SION | SOLVENT | HCl (wt %) | HF (wt %) | HF/HCl 1:1 (wt %) | Emu lsion Stability @ 25°C, 4 hrs | Emulsion Stability @ 25°C, 12 hrs | Emul sion Stability @ 90°C, 4 hrs | Emulsion Stability @ 80°C, 4 hrs | Emulsion Stability @ 148°C, 4 hrs | Emul sion Stability @ 150° C, 5 hrs |
|---|---|---|---|---|---|---|---|---|---|---|---|---|---|
| ALFOL 6-35PO-20EO (**Comparative**) | 3 | 5.8 | W/O | Diesel | 15 | - | - | Stable | - | Unstable | - | - | - |
| SAFOL 23 8PO-4EO (**Comparative**) | 3 | 4.2 | O/W | Diesel | 15 | - | - | - | - | - | No stable W/O | No stable W/O | - |
| ISOFOL 28-3.5EO (**Comparative**) | 3 | 5.5 | W/O | Diesel | 15 | - | - | - | - | Unstable < 1 hr | - | - | - |
| ISOFOL 28-8EO (**Comparative**) | 3 | 9.2 | W/O | Diesel | 15 | - | - | - | - | - | Unstable | Unstable | - |
| ISOFOL 12-9EO (**Comparative**) | 3 | 13.6 | O/W | Diesel | 15 | - | - | - | - | - | No stable - W/O | No stable W/O | - |
| ALFOL 18-3EO (**Comparative**) | 3 | 6.6 | W/O | Diesel | 15 | - | - | - | - | - | Unstable | Unstable | - |

EP 4 430 139 B1

All experiments used 27 volume% hydrocarbon solvent and 70 volume% acid solution, unless specifically defined otherwise.

To demonstrate stability of emulsifier systems with the addition of co-solvents to the non-ionic surfactant (non-ionic surfactant : co-solvent = 75 : 25 by weight %), in order to assist with flowability of formulations at room temperature, the following results were obtained:

**TABLE 6:** Emulsion stability tests conducted when co-solvent was added to the non-ionic surfactant

| SURFACTANT | HLB | CO-SOLVENT * | VISCOSITY @ 25°C (mPas) | SOLVENT | HCl (wt%) | Emulsion Stability @ 25°C, 4 hrs | Emulsion Stability @ 25°C, 24 hrs | Emulsion Stability @ 25°C, 48 hrs | Emulsion Stability @ 80°C, 4 hrs |
|---|---|---|---|---|---|---|---|---|---|
| NAFOL 1618S-35PO-20EO | 5.6 | L2 | 75 | Diesel | 15 | Stable | Stable | Stable | Stable |
| | | | | | | | | | |
| NAFOL 20-35PO-20EO | 5.5 | L2 | 77 | Diesel | 15 | Stable | Stable | Stable | Stable |
| NAFOL 20-35PO-10EO | 3.2 | L1 | 55 | Diesel | 15 | Stable | Stable | Stable | Stable |
| ALFOL 20-35PO-20EO | 5.4 | L2 | 72 | Diesel | 15 | Stable | Stable | Stable | Stable |
| ALFOL 20-35PO-10-EO | 3.1 | L1 | 59 | Diesel | 15 | Stable | Stable | Stable | Stable |
| | | | | | | | | | |
| ISOFOL 28-35PO-10EO | 3.1 | L1 | 53 | Diesel | 15 | Stable | Stable | Stable | Stable |
| ISOFOL 24-35PO-20EO | 5.4 | L1 | 65 | Diesel | 15 | Stable | Stable | Stable | Stable |
| ISOFOL 24-35PO-10EO | 3.1 | L2 | 54 | Diesel | 20 | Stable | Stable | Stable | Stable |
| * When no co-solvent was added, the emulsifier systems were pasty to semi-solid. | | | | | | | | | |

**Claims**

1. A water-in-oil emulsifier injection fluid comprising:

   i) at least one alkoxylated alcohol or mixture of alkoxylated alcohols having the following structure:

   $$R\text{-}O\text{-}(C_3H_6O)_m\text{-}(C_2H_4O)_n\text{-}H \qquad (I)$$

   wherein
   R is a linear or a branched alkyl group having from 12 to 36 carbon atoms; and

   $$m \geq 10,$$

   $$n \geq 1,$$

   and wherein
   the alkoxylated alcohol or mixture of alkoxylated alcohols have a hydrophilic lipophilic balance (HLB) value of 3.0 to 7.5, more preferably 4.0 to 7.0, most preferably 5.9 to 6.5;
   ii) an inorganic acid or acids and/or an organic acid or acids, or mixtures thereof,
   iii) at least one hydrocarbon solvent or mixtures thereof.

2. The use of alkoxylated alcohols having the following structure:

   $$R\text{-}O\text{-}(C_3H_6O)_m\text{-}(C_2H_4O)_n\text{-}H \qquad (I)$$

   wherein

   R is a linear or a branched alkyl group having from 12 to 36 carbon atoms;
   wherein

   $$m \geq 10,$$

   $$n \geq 1,$$

   and wherein

   the alkoxylated alcohol or mixture of alkoxylated alcohols have a hydrophilic lipophilic balance (HLB) value of 3.0 to 7.5, preferably 4.0 to 7.0, most preferably 5.9 to 6.5;
   in a water-in-oil emulsifier injection fluid comprising a hydrocarbon solvent and an organic or inorganic acid or mixtures of acids, being utilized for acid stimulation in subterranean formations.

3. The use of claim 2 or the injection fluid of claim 1, wherein
   both m and $n \geq 10$, preferably $m \geq 20$.

4. The use of claims 2 or 3 or the injection fluid of claim 1 or 3, wherein $m/n \geq 1.0$.

5. The use of any one of claims 2 to 4 or the injection fluid of any one of the claims 1, 3 or 4, wherein
   R has 16 to 36 carbon atoms.

6. The use of the injection fluid of any one of claims 2 to 5 or the injection fluid of any one of the claims 1 or 3 to 5, wherein R is a branched alkyl group, specifically branched at carbon number 2 of the alkyl group.

7. The use of the injection fluid of any one of claims 2 to 5 or the injection fluid of any one of the claims 1 or 3 to 5, wherein R is a linear alkyl group.

8. The use of the injection fluid of any one of claims 2 to 7 or the injection fluid of any one of the claims 1 or 3 to 7, wherein the organic acid comprises formic acid, acetic acid, malonic acid, oxalic acid, glycolic acid or citric acid.

9. The use of the injection fluid of any one of claims 2 to 8 or the injection fluid of any one of the claims 1 or 3 to 8, wherein the inorganic acid comprises hydrochloric acid (HCl) or hydrofluoric acid (HF).

10. The use of the injection fluid of any one of claims 2 to 9, wherein the inorganic acid is diluted in water to a strength of 3 to 28 wt% or the injection fluid of any one of the claims 1 or 3 to 9 wherein the inorganic acid is diluted in water to a strength of 0.1 to 28 wt%, preferably 3 to 20 wt%.

11. The use of the injection fluid of any one of claims 2 to 10 or the injection fluid of any one of the claims 1 or 3 to 10, wherein the hydrocarbon solvent comprises diesel or mixtures of olefins, paraffins, aromatics, naphthenics and/or oxygenates.

12. The use of the injection fluid of any one of claims 2 to 11 or the injection fluid of any one of the claims 1 or 3 to 11, wherein the inorganic acid or acids and/ or the organic acid or acids or mixtures thereof is added to the injection fluid in an amount of 50 to 80 volume%, preferably 60 to 75 volume%, most preferably 65 to 70 volume%.

13. The use of the injection fluid of any one of claims 2 to 12 or the injection fluid of any one of the claims 1 or 3 to 12, wherein the hydrocarbon solvent is added to the injection fluid in an amount of 20 to 50 volume%, preferably 25 to 40 volume%, most preferably 30 to 35 volume%.

14. The use of the injection fluid of any one of claims 2 to 13 or the injection fluid of any one of the claims 1 or 3 to 13, wherein the alkoxylated alcohol or mixture of alkoxylated alcohols is added to the injection fluid in an amount of 0.1 to 5.0 volume%, preferably 0.3 to 4.0 volume%, most preferably 1.0 to 3.0 volume%.

15. The use of the injection fluid of claim 2 to 14 or the injection fluid of any one of the claims 1 or 3 to 14, wherein the co-solvent is added to the alkoxylated alcohol or mixture of alkoxylated alcohols, preferably in an amount of 5 to 50 wt%, more preferably 15 to 40 wt%, most preferably 20 to 25 wt%.

16. The use of the injection fluid of claim 15 or the injection fluid of claim 15, wherein the co-solvent or mixture of co-solvents comprises alcohols, alkoxylated alcohols, alcohol ethers, poly-alkylene alcohol ethers, polyalkylene glycols, poly(oxyalkylene) glycols or poly(oxyalkylene) glycol ethers.

17. The use of any of one of claims 2 to 16, wherein the hydrocarbon solvent is a crude oil and the subterranean formation is a well.

18. A method for acid stimulation of a subterranean formation, the method comprising

i) injecting an injection fluid of claim 1 or any one of the claims 3 to 16 into the subterranean formation;
ii) allowing for sufficient time for the injection fluid to react with the minerals in the subterranean formation; and
iii) providing improved flow paths in the subterranean formation for production of hydrocarbons.


**Patentansprüche**

1. Eine Wasser-in-Öl-Emulgator-Injektionsflüssigkeit, umfassend:

i) mindestens einen alkoxylierten Alkohol oder eine Mischung aus alkoxylierten Alkoholen mit der folgenden Struktur:

$$R\text{-}O\text{-}(C_3H_6O)_m\text{ -}(C_2H_4O)_n\text{-}H \qquad (I)$$

wobei
R eine lineare oder verzweigte Alkylgruppe mit 12 bis 36 Kohlenstoffatomen ist; und

$$m \geq 10,$$

$$n \geq 1,$$

und wobei

der alkoxylierte Alkohol oder die Mischung aus alkoxylierten Alkoholen einen hydrophil-lipophilen Gleichgewichtswert (HLB-Wert) von 3,0 bis 7,5, vorzugsweise von 4,0 bis 7,0, am bevorzugtesten von 5,9 bis 6,5 aufweist;
ii) eine oder mehrere anorganische Säuren und/oder eine oder mehrere organische Säuren oder Mischungen davon,
iii) mindestens ein Kohlenwasserstoff-Lösungsmittel oder Mischungen davon.

2. Eine Verwendung von alkoxylierten Alkoholen mit der folgenden Struktur:

$$R\text{-}O\text{-}(C_3H_6O)_m\text{ -}(C_2H_4O)_n\text{-}H \qquad (I)$$

wobei

R eine lineare oder verzweigte Alkylgruppe mit 12 bis 36 Kohlenstoffatomen ist;
wobei

$$m \geq 10,$$

$$n \geq 1,$$

und wobei

der alkoxylierte Alkohol oder die Mischung aus alkoxylierten Alkoholen einen hydrophil-lipophilen Gleichgewichtswert (HLB-Wert) von 3,0 bis 7,5, vorzugsweise von 4,0 bis 7,0, am bevorzugtesten von 5,9 bis 6,5 aufweist; in einer Wasser-in-Öl-Emulgator-Injektionsflüssigkeit, die ein Kohlenwasserstoff-Lösungsmittel und eine organische oder anorganische Säure oder Mischungen von Säuren umfasst, und zur Säurestimulation in unterirdischen Formationen verwendet wird.

3. Die Verwendung nach Anspruch 2 oder die Injektionsflüssigkeit nach Anspruch 1, wobei sowohl m als auch $n \geq 10$, vorzugsweise $m \geq 20$, ist.

4. Die Verwendung gemäß Anspruch 2 oder 3 oder die Injektionsflüssigkeit gemäß Anspruch 1 oder 3, wobei $m/n \geq 1,0$.

5. Die Verwendung nach zumindest einem der Ansprüche 2 bis 4 oder die Injektionsflüssigkeit nach zumindest einem der Ansprüche 1, 3 oder 4, wobei R 16 bis 36 Kohlenstoffatome aufweist.

6. Die Verwendung der Injektionsflüssigkeit nach zumindest einem der Ansprüche 2 bis 5 oder die Injektionsflüssigkeit nach zumindest einem der Ansprüche 1 oder 3 bis 5, wobei R eine verzweigte Alkylgruppe ist, die spezifisch an der Kohlenstoffnummer 2 der Alkylgruppe verzweigt ist.

7. Die Verwendung der Injektionsflüssigkeit nach zumindest einem der Ansprüche 2 bis 5 oder die Injektionsflüssigkeit nach zumindest einem der Ansprüche 1 oder 3 bis 5, wobei R eine lineare Alkylgruppe ist.

8. Die Verwendung der Injektionsflüssigkeit nach zumindest einem der Ansprüche 2 bis 7 oder die Injektionsflüssigkeit nach zumindest einem der Ansprüche 1 oder 3 bis 7, wobei die organische Säure Ameisensäure, Essigsäure, Malonsäure, Oxalsäure, Glykolsäure oder Zitronensäure umfasst.

9. Die Verwendung der Injektionsflüssigkeit nach zumindest einem der Ansprüche 2 bis 8 oder die Injektionsflüssigkeit nach zumindest einem der Ansprüche 1 oder 3 bis 8, wobei die anorganische Säure Salzsäure (HCl) oder Flusssäure (HF) umfasst.

10. Die Verwendung der Injektionsflüssigkeit nach zumindest einem der Ansprüche 2 bis 9, wobei die anorganische Säure in Wasser auf eine Konzentration von 3 bis 28 Gew.-% verdünnt ist, oder die Injektionsflüssigkeit nach zumindest einem der Ansprüche 1 oder 3 bis 9, wobei die anorganische Säure in Wasser auf eine Konzentration von 0,1 bis 28 Gew.-%, vorzugsweise 3 bis 20 Gew.-%, verdünnt ist.

11. Die Verwendung der Injektionsflüssigkeit nach zumindest einem der Ansprüche 2 bis 10 oder die Injektionsflüssigkeit nach zumindest einem der Ansprüche 1 oder 3 bis 10, wobei das Kohlenwasserstoff-Lösungsmittel Diesel oder Mischungen aus Olefinen, Paraffinen, Aromaten, naphthenischen Verbindungen und/oder Oxygenaten umfasst.

12. Die Verwendung der Injektionsflüssigkeit nach zumindest einem der Ansprüche 2 bis 11 oder die Injektionsflüssigkeit nach zumindest einem der Ansprüche 1 oder 3 bis 11, wobei die eine oder mehreren anorganischen Säuren und/oder die eine oder mehreren organischen Säuren oder Mischungen davon der Injektionsflüssigkeit in einer Menge von 50 bis 80 Vol.-%, vorzugsweise 60 bis 75 Vol.-%, am bevorzugtesten 65 bis 70 Vol.-%, zugesetzt werden.

13. Die Verwendung der Injektionsflüssigkeit nach zumindest einem der Ansprüche 2 bis 12 oder die Injektionsflüssigkeit nach zumindest einem der Ansprüche 1 oder 3 bis 12, wobei das Kohlenwasserstoff-Lösungsmittel der Injektionsflüssigkeit in einer Menge von 20 bis 50 Vol.-%, vorzugsweise 25 bis 40 Vol.-%, am bevorzugtesten 30 bis 35 Vol.-%, zugesetzt wird.

14. Die Verwendung der Injektionsflüssigkeit nach zumindest einem der Ansprüche 2 bis 13 oder die Injektionsflüssigkeit nach zumindest einem der Ansprüche 1 oder 3 bis 13, wobei der alkoxylierte Alkohol oder die Mischung aus alkoxylierten Alkoholen der Injektionsflüssigkeit in einer Menge von 0,1 bis 5,0 Vol.-%, vorzugsweise 0,3 bis 4,0 Vol.-%, vorzugsweise 1,0 bis 3,0 Vol.-%.

15. Die Verwendung der Injektionsflüssigkeit nach Anspruch 2 bis 14 oder die Injektionsflüssigkeit nach zumindest einem der Ansprüche 1 oder 3 bis 14, wobei das Co-Lösungsmittel dem alkoxylierten Alkohol oder der Mischung aus alkoxylierten Alkoholen zugegeben wird, vorzugsweise in einer Menge von 5 bis 50 Gew.-%, noch bevorzugter 15 bis 40 Gew.-%, am meisten bevorzugt 20 bis 25 Gew.-%.

16. Die Verwendung der Injektionsflüssigkeit nach Anspruch 15 oder die Injektionsflüssigkeit nach Anspruch 15, wobei das Co-Lösungsmittel oder die Mischung von Co-Lösungsmitteln Alkohole, alkoxylierte Alkohole, Alkoholether, Polyalkylenalkoholether, Polyalkylenglykole, Poly(oxyalkylen)glykole oder Poly(oxyalkylen)glykolether umfasst.

17. Die Verwendung nach zumindest einem der Ansprüche 2 bis 16, wobei das Kohlenwasserstoff-Lösungsmittel ein Rohöl ist und die unterirdische Formation ein Bohrloch ist.

18. Ein Verfahren zur Säurestimulation einer unterirdischen Formation, wobei das Verfahren umfasst

i) injizieren einer Injektionsflüssigkeit gemäß Anspruch 1 oder zumindest einem der Ansprüche 3 bis 16 in die unterirdische Formation;
ii) erlauben von ausreichender Zeit für die Reaktion der Injektionsflüssigkeit mit den Mineralien in der unterirdischen Formation; und
iii) bereitstellen verbesserter Strömungswege in der unterirdischen Formation für die Förderung von Kohlenwasserstoffen.

**Revendications**

1. Fluide d'injection d'émulsifiant eau-dans-huile, comprenant :

i) au moins un alcool alcoxylé ou un mélange d'alcools alcoxylé ayant la structure suivante :

$$R\text{-}O\text{-}(C_3H_6O)_m\text{-}(C_2H_4O)_n\text{-}H \qquad (I)$$

dans laquelle :

R est un groupe alkyle linéaire ou ramifié ayant de 12 à 36 atomes de carbone ; et

$$m \geq 10,$$

$$n \geq 1,$$

et

dans lequel l'alcool alcoxylé ou le mélange d'alcools alcoxylés a une valeur d'équilibre hydrophile lipophile (HLB) de 3,0 à 7,5, de façon davantage préférée de 4,0 à 7,0, de la façon que l'on préfère le plus de 5,9 à 6,5 ;

ii) un ou des acides inorganiques et/ou un ou des acides organiques, ou leurs mélanges,
iii) au moins un solvant hydrocarboné ou leurs mélanges.

2. Utilisation d'alcools alcoxylés ayant la structure suivante :

$$R\text{-}O\text{-}(C_3H_6O)_m\text{-}(C_2H_4O)_n\text{-}H \qquad (I)$$

dans laquelle :

R est un groupe alkyle linéaire ou ramifié ayant de 12 à 36 atomes de carbone ;
dans laquelle

$$m \geq 10,$$

$$n \geq 1,$$

et dans laquelle l'alcool alcoxylé ou le mélange d'alcools alcoxylés a une valeur d'équilibre hydrophile lipophile (HLB) de 3,0 à 7,5, de préférence de 4,0 à 7,0, de la façon que l'on préfère le plus de 5,9 à 6,5;
dans un fluide d'injection d'émulsifiant eau-dans-huile comprenant un solvant hydrocarboné et un acide organique ou inorganique ou mélanges d'acides, qui est utilisé pour la stimulation acide dans des formations souterraines.

3. Utilisation selon la revendication 2 ou fluide d'injection selon la revendication 1, dans laquelle/dans lequel à la fois m et n ≥ 10, de préférence m ≥ 20.

4. Utilisation selon la revendication 2 ou 3 ou fluide d'injection selon la revendication 1 ou 3, dans laquelle/dans lequel m/n ≥ 1,0.

5. Utilisation selon l'une quelconque des revendications 2 à 4 ou fluide d'injection selon l'une quelconque des revendications 1, 3 ou 4, dans laquelle/dans lequel R a de 16 à 36 atomes de carbone.

6. Utilisation du fluide d'injection selon l'une quelconque des revendications 2 à 5 ou fluide d'injection selon l'une quelconque des revendications 1 ou 3 à 5, dans laquelle/dans lequel R est un groupe alkyle ramifié, spécifiquement ramifié au carbone numéro 2 du groupe alkyle.

7. Utilisation du fluide d'injection selon l'une quelconque des revendications 2 à 5 ou fluide d'injection selon l'une quelconque des revendications 1 ou 3 à 5, dans laquelle/dans lequel R est un groupe alkyle linéaire.

8. Utilisation du fluide d'injection selon l'une quelconque des revendications 2 à 7 ou fluide d'injection selon l'une quelconque des revendications 1 ou 3 à 7, dans laquelle/dans lequel l'acide organique comprend l'acide formique, l'acide acétique, l'acide malonique, l'acide oxalique, l'acide glycolique ou l'acide citrique.

9. Utilisation du fluide d'injection selon l'une quelconque des revendications 2 à 8 ou fluide d'injection selon l'une quelconque des revendications 1 ou 3 à 8, dans laquelle/dans lequel l'acide inorganique comprend l'acide chlorhydrique (HCl) ou l'acide fluorhydrique (HF).

10. Utilisation du fluide d'injection selon l'une quelconque des revendications 2 à 9, dans lequel l'acide inorganique est dilué dans l'eau à une concentration de 3 à 28 % en poids, ou fluide d'injection selon l'une quelconque des revendications 1 ou 3 à 9, dans laquelle/dans lequel l'acide inorganique est dilué dans l'eau à une concentration de 0,1 à 28 % en poids, de préférence de 3 à 20 % en poids.

11. Utilisation du fluide d'injection selon l'une quelconque des revendications 2 à 10 ou fluide d'injection selon l'une quelconque des revendications 1 ou 3 à 10, dans laquelle/dans lequel le solvant hydrocarboné comprend du diesel ou des mélanges d'oléfines, de paraffines, d'aromatiques, de naphténiques et/ou d'oxygénats.

12. Utilisation du fluide d'injection selon l'une quelconque des revendications 2 à 11 ou fluide d'injection selon l'une quelconque des revendications 1 ou 3 à 11, dans laquelle/dans lequel le ou les acides inorganiques et/ou le ou les acides organiques ou leurs mélanges sont ajoutés au fluide d'injection dans une quantité de 50 à 80 % en volume, de préférence de 60 à 75 % en volume, de la façon que l'on préfère le plus de 65 à 70 % en volume.

13. Utilisation du fluide d'injection selon l'une quelconque des revendications 2 à 12 ou fluide d'injection selon l'une quelconque des revendications 1 ou 3 à 12, dans laquelle/dans lequel le solvant hydrocarboné est ajouté au fluide d'injection dans une quantité de 20 à 50 % en volume, de préférence de 25 à 40 % en volume, de la façon que l'on préfère le plus de 30 à 35 % en volume.

14. Utilisation du fluide d'injection selon l'une quelconque des revendications 2 à 13 ou fluide d'injection selon l'une quelconque des revendications 1 ou 3 à 13, dans laquelle/dans lequel l'alcool alcoxylé ou le mélange d'alcools alcoxylés est ajouté au fluide d'injection dans une quantité de 0,1 à 5,0 % en volume, de préférence de 0,3 à 4,0 % en volume, de la façon que l'on préfère le plus de 1,0 à 3,0 % en volume.

15. Utilisation du fluide d'injection selon l'une des revendications 2 à 14 ou fluide d'injection selon l'une quelconque des revendications 1 ou 3 à 14, dans laquelle/dans lequel le co-solvant est ajouté à l'alcool alcoxylé ou au mélange d'alcools alcoxylés, de préférence dans une quantité de 5 à 50 % en poids, de façon davantage préférée de 15 à 40 % en poids, de la façon que l'on préfère le plus de 20 à 25 % en poids.

16. Utilisation du fluide d'injection selon la revendication 15 ou fluide d'injection selon la revendication 15, dans laquelle/dans lequel le co-solvant ou le mélange de co-solvants comprend des alcools, des alcools alcoxylés, des alcool éthers, des poly-alkylène alcool éthers, des polyalkylène glycols, des poly(oxyalkylène) glycols ou des poly(oxyalkylène) glycol éthers.

17. Utilisation selon l'une quelconque des revendications 2 à 16, dans laquelle le solvant hydrocarboné est un pétrole brut et la formation souterraine est un puits.

18. Procédé de stimulation acide d'une formation souterraine, le procédé comprenant :

    i) injecter un fluide d'injection selon la revendication 1 ou l'une quelconque des revendications 3 à 16 dans la formation souterraine ;
    ii) laisser suffisamment de temps au fluide d'injection pour réagir avec les minéraux dans la formation souterraine ; et
    iii) disposer des trajets d'écoulement améliorés dans la formation souterraine pour la production d'hydrocarbures.

**EP 4 430 139 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7299870 B
- WO 2017035040 A
- US 20140073540 A
- US 20160068742 A

**Non-patent literature cited in the description**

- *J. Soc. Cosmet. Chem*, 1954, vol. 5, 249-256